# EUROPEAN PATENT SPECIFICATION

(11) **EP 2 234 428 B1**
(45) Date of publication and mention of the grant of the patent: **25.05.2016**
(21) Application number: 10167942.1
(22) Date of filing: 10.08.2005
(51) Int. Cl.: H04W 28/06, H04W 52/04, H04W 52/54

(54) **Method for communicating user equipment specific information in cellular communication system**
Verfahren zur Übermittlung von benutzerendgerätespezifischen Informationen in zellularem Kommunikationssystem
Procédé de communication d'information spécifique d'un équipement utilisateur dans un système de communication cellulaire

(30) Priority: 13.08.2004 GB 0418107
(43) Date of publication of application: 29.09.2010
(62) Divisional of application: 05775832.8
(73) Proprietor: Sony Corporation, Tokyo 108-0075 (JP)
(72) Inventor: Anderson, Nicholas William, Warmley Wiltshire BS30 5JL (GB)
(74) Representative: D Young & Co LLP

(56) References cited:
- EP-A1- 0 977 370
- US-A1- 2002 168 994

## Description

### Field of the invention

The invention relates to a method for communicating user equipment specific information in cellular communication system and in particular, but not exclusively, to communication of transmit power control and synchronisation data.

### Background of the Invention

In the last decades, cellular communication systems for mobile communication have become commonplace. Originally cellular communication systems provided only voice services but over time an increasing number of services have been provided either through enhancements to existing cellular communication systems or through the development of new cellular communication systems.

For example, 3rd generation cellular communication systems have been, and are being, standardized by the 3rd Generation Partnership Project (3GPP). These 3rd generation cellular communication systems have been standardised to provide a large number of different services aimed at different applications.

In particular data packet services suitable for data communication are supported by most cellular communication systems. For example, downlink packet data services are supported within the 3GPP release 5 specifications in the form of the High Speed Downlink Packet Access (HSDPA) service. In this system, transmission code resources are shared amongst users according to their traffic needs. The base station or "Node-B" is responsible for allocating and distributing the resources to the users, within a so-called scheduling task.

The allocation information itself is transmitted to the users via a High Speed - Shared Common Control CHannel (HS-SCCH). This furnishes the user equipment (UE) with knowledge of the forthcoming transmission on the HSDPA shared resources (the High Speed - Downlink Shared CHannel - HS-DSCH). The UE can thus prepare itself and configure its receiver appropriately for the transmission.

In addition to these shared resources used for data and signalling purposes, the current release 5 specifications mandate the existence of associated uplink and downlink Dedicated Physical CHannels (DPCH's).

In accordance with the 3GPP specifications, the HSDPA service may be used in both Frequency Division Duplex (FDD) mode and Time Division Duplex (TDD) mode.

For the FDD mode, the purpose of these channels is:
Downlink DPCH:
   - to potentially carry data from the layers above the physical layer (provided that any data is mapped to the Dedicated CHannel (DCH))
   - to carry Transmit Power Control (TPC) commands to the UE to control the uplink DPCH
   - to carry downlink pilot symbols to the UE (these symbols are used to derive channel quality feedback for transmission to the base station and to facilitate demodulation of downlink signals)
Uplink DPCH:
   - to carry data from the layers above the physical layer
   - to carry TPC feedback for the downlink DPCH

For the TDD mode, the purpose of these channels is:
1.28Mcps TDD service
   - to carry data from the layers above the physical layer (provided that any data is mapped to the DCH)
   - to carry TPC data for the uplink DPCH power control
   - to carry SS for uplink DPCH synchronisation
3.84Mcps TDD Service
   - to carry data from the layers above the physical layer (provided that any data is mapped to the DCH)

A disadvantage of the current approach for HSDPA is that the assignment of a dedicated channelisation code to each active user equipment consumes a large fraction of the available code resources. The channelisation code is used by the Code Division Multiple Access (CDMA) system to separate between data for different user equipment. In a 3rd Generation cellular communication system, the number of available channelisation codes that can be used by a base station is significantly limited on the downlink for FDD and TDD, and on the uplink for TDD. In addition, the transmit power associated with transmission of the control information to the individual user equipment causes interference to other communications. Accordingly the current approach may significantly reduce the code and power resources available for use by other channels, such as for the HS-DSCH.

The HS-DSCH is especially efficient at handling bursty user traffic profiles, such as are common in packet-data communication systems. Dedicated channels on the other hand are generally more suited to constant bit rate applications, such as voice, and some types of video conferencing technologies. These services are generally termed "conversational class" services. When using HSDPA packet data services without the existence of parallel conversational class services, it is possible to map all higher layer data for downlink onto other downlink transport channels than the DCH. In such situations, only very little information is communicated on the DPCH physical channel.

Specifically, only the following information may in some cases be carried by the DPCH:
FDD
   - TPC commands for uplink DPCH power control
   - Dedicated pilot symbols for downlink 1.28 Mcps TDD

   - TPC commands for uplink DPCH power control
   - SS commands for uplink DPCH synchronisation
3.84Mcps TDD
   - <no uses>

As the data rate for this information is extremely low, the use of a dedicated DPCH results in a highly inefficient communication. Therefore, it would be advantageous if a more efficient means of communicating dedicated UE specific information to individual UEs could be found. In particular, it would be advantageous to more efficiently carry the TPC/pilot/SS information to the user equipment such that the requirement for an associated downlink DPCH to exist with each HSDPA service could be removed or relaxed.

One solution which has been proposed is known as the "fractionated DPCH" (F-DPCH) concept. This approach is only applicable to FDD and seeks to improve the channelisation code efficiency of HSDPA. In this concept, for HSDPA "data-only" users (ie: those with no conversational-class traffic), downlink signalling (DCCH) and traffic (DTCH) are not mapped to a DCH transport channel but are instead mapped to either the HS-DSCH or FACH transport channels. Furthermore, in the F-DPCH concept, the downlink code resources used for transmission of TPC and (possibly) pilot symbols are time multiplexed onto the same channelisation code which may be continuously transmitted.

However, although the proposed time multiplexing of data onto a transmitted channelisation code may be suited for some applications, it may be disadvantageous in other circumstances.

For example, the FDD F-DPCH concept is unsuitable for TDD communication.

Specifically, the TDD data is transmitted in timeslots with a data portion either side of a midamble portion and a guard-period at the end of the burst. The midamble portion must be received in order to detect, demodulate and receive the data payload portions. Thus a whole timeslot must be received to transfer any data.

Furthermore for TDD, the maximum channelisation code spreading factor is 16, whereas for FDD it is 256. Thus, whereas the minimum unit of transmission for TDD is one timeslot with one channelisation code at spreading factor 16, the minimum transmission unit for FDD may be much smaller and it is therefore much better suited for transmission of small amounts of UE specific data. For example, the minimum transmission unit for 1.28Mcps TDD (1 timeslot, 1 code at SF16, QPSK modulation) communication comprises 88 bits. It is clear that the minimum transmission unit for TDD is therefore too large to efficiently carry the TPC and SS information which is typically only 3 bits.

Some of the above disadvantages may be alleviated through the use of a duty-cycle wherein data is transmitted to users using a single minimum transmission unit only one frame in every "N" frames. However, this has the disadvantage that the update rate of the signalling is substantially reduced and this will greatly impair the performance of the power control and synchronisation loops.

Thus, the current approach for transmitting small amounts of UE specific information to individual UEs is inefficient, cumbersome and may result in low update rates.

Hence, an improved system for communicating user equipment specific information in a cellular communication system would be advantageous.

EP0977370 discloses a packet switched communications system in which a station communicates with at least one user over a downlink communication channel, the downlink communication channel is divided into a plurality of frames and each frame includes a plurality of data packets. Each data packet is directed to a predetermined user and includes transmission power control information for said user. An extended transmission power control information field is provided in at least one data packet in every frame, which includes transmission power control information for at least one other user of the communication system.

### Summary of the Invention

Accordingly, the Invention seeks to preferably mitigate, alleviate or eliminate one or more of the above mentioned disadvantages singly or in any combination.

Aspects of the invention are set out in the appended claims.

According to a first example there is provided an apparatus for transmitting user equipment specific information from a base station to a user equipment in a cellular communication system; the apparatus comprising: means for combining user equipment specific information for a plurality of user equipment to generate combined user equipment specific information; means for encoding the combined user equipment specific information; and means for transmitting the combined user equipment specific information in a minimum transmission resource unit.
The UE specific information may be control information.

The invention may allow a more efficient communication of user equipment (UE) specific information. In particular, low amounts of UE specific information may efficiently be communicated with high update rates. For example, in situations where the UE specific information is significantly less than the capacity of a minimum transmission resource unit, the overhead associated with communicating the information may be substantially reduced

Embodiments of the invention may provide reduced interference, increased update rates, reduced transmit resource usage and/or improved performance of the cellular communication system as a whole. In particular, the cellular communication system's usage of code and power resources could be significantly improved and system capacity could be correspondingly increased.

According to an optional feature of the invention, the minimum transmission resource unit is a time slot. The invention may allow an efficient communication of UE specific information for a plurality of UEs in a single time slot. In embodiments, such as for the 3GPP TDD system, the minimum transmission resource unit may be a channelisation code on a time slot.

According to an optional feature of the invention, the minimum transmission resource unit is a single time code frequency resource allocation unit.

The invention may allow an efficient communication of UE specific information for a plurality of UEs in a single time code frequency resource allocation unit. The time code frequency resource allocation unit uses a single code in a time interval on a single frequency carrier. In embodiments wherein code division is not used, the time code frequency resource allocation unit will inherently be associated with a single code (corresponding to no spreading or channelisation or code division). In embodiments wherein time division is not used, the time code frequency resource allocation unit will inherently be associated with a single time interval.

According to an optional feature of the invention, the means for encoding is operable to jointly encode user equipment specific information for at least two of the plurality of user equipment.

The joint encoding may be such that encoded data relating to a first user equipment is determined in response to user equipment specific information associated with at least a second user equipment. The joint encoding may be such that at least one data bit of the encoded data comprises information relating to UE specific information for more than one user equipment.

The feature may allow a more efficient communication of the UE specific information. For example, if three parameters of the UE specific information may take on five potential values, each individual parameter requires three data bits to represent the actual value. However, the total number of possible values for the three parameters is (5³)=125 potential values. Hence a combined parameter value may be represented by seven bits rather than the nine bits required for individual coding. The optional feature may in some embodiments allow a binary signalling efficiency which is increased by combining the data streams for more than one UE.

According to an optional feature of the invention, the means for encoding is operable to jointly encode user equipment specific information associated with all user equipment of the plurality of user equipment. This may improve the encoding efficiency.

According to an optional feature of the invention, the encoding comprises forward error correcting coding. This may improve performance of the communication of the UE specific information. A joint forward error correcting coding may be applied to UE specific information for a plurality of UEs. This may provide enhanced error correcting performance compared to only applying the error correction to individual data for a single UE. In particular improved time diversity may be achieved. Interleaving may be performed as part of the forward error correction coding.

According to an optional feature of the invention, the user equipment specific information comprises a plurality of parameters each having a number of possible values, and the means for encoding is operable to encode the plurality of parameters by encoding a combined parameter having a combined number of possible values equal to the product of the number of possible values of the plurality of parameters. This provides for improved efficiency and/or facilitated implementation. For example, a first parameter having five possible values, a second parameter having six possible values and a third parameter having seven possible values may be encoded by encoding of a combined parameter having 5*6*7=210 possible values, i.e. by eight bits rather than 3*3=9 bits.

According to an optional feature of the invention, the user equipment specific information comprises power control information. The invention may provide an efficient means for communicating power control information. In particular, a low overhead and/or high update rate may be achieved. Power control information typically comprises small amounts of information to be communicated at a sufficiently high data rate and the invention may therefore provide a particularly advantageous means of operating a power control loop over the air interface.

According to an optional feature of the invention, the user equipment specific information comprises synchronisation information.

The synchronisation information may e.g. be code synchronisation and/or timing synchronisation including data symbol timing synchronisation.

The invention may provide an efficient means for communicating synchronisation information. In particular, a low overhead and/or high update rate may be achieved. Synchronisation information typically comprises small amounts of information to be communicated at a sufficiently high data rate and the invention may therefore provide a particularly advantageous means of operating a power control loop over the air interface.

The UE specific information may in some embodiments consist in power control information and synchronisation.

According to an optional feature of the invention, the user equipment specific information comprises only synchronisation information. This may improve the efficiency of communication of control information in some systems as the data rate may be reduced. For example, power control may be achieved through other means such as open loop power control loop methods.

According to an optional feature of the invention, the user equipment specific information is associated with an uplink channel from each of the plurality of user equipment.

The uplink channel may for example be a dedicated physical channel of the cellular communication system and the user equipment specific information may be control information associated with the uplink channel. The invention may thus provide an efficient means of e.g. controlling or managing an uplink channel by transmission of downlink data using little communication resource and having a high update rate. According to an optional feature of the invention, the apparatus further comprises means for setting a transmit power for the minimum transmission resource unit in response to a transmit power requirement of the plurality of user equipment.

Specifically, a required or desired transmit power may be determined for each user equipment of the plurality of user equipment and the transmit power of the minimum transmission resource unit may be set to the highest determined transmit power. This may ensure an efficient communication with low transmit power resource use while ensuring that all user equipment of the plurality of user equipment receive a signal of adequate quality.

According to an optional feature of the invention, the apparatus further comprises means for transmitting position information indicative of a position of user equipment specific information for a first user equipment.

The position information may indicate the position of data for the first user equipment within the minimum transmission resource unit. The position information may enable or assist an individual user equipment in determining the user specific data for that individual user equipment within the combined information stream. The position information may be an explicit and/or direct indication or may for example be an associative and/or indirect indication.

According to an optional feature of the invention, the user equipment specific information is control information associated with a High Speed Downlink Packet Access (HSDPA) service.

The High Speed Downlink Packet Access (HSDPA) may specifically be the HSDPA service specified by the 3^{rd} Generation Partnership Project (3GPP). The invention may thus provide for an efficient communication of control information for an HSDPA service and may in particular provide for an efficient control or feedback for uplink communication.

According to an optional feature of the invention, the user equipment specific information is associated with an uplink dedicated physical channel (DPCH) of the HSDPA downlink packet data service.

In particular, the DPCH may be an uplink dedicated physical channel (DPCH) as standardized by 3GPP. The invention may provide an extremely efficient control of uplink DPCH channels with a low resource use and a high performance due to a high update rate.

According to an optional feature of the invention, the means for encoding is operable to encode the combined user equipment specific information by using processing algorithms of a group of algorithms used by a plurality of services.

The plurality of services may be dedicated or shared channels and may correspond to data communication using other physical or logical channels than used for the minimum transmission resource unit. Specifically for a 3GPP embodiment, the encoding of the UE specific information may use standardised 3GPP transport channel processing methods. Thus a toolbox of standardised algorithms and processes may be used to map the multiplexed, concatenated, or otherwise combined user data from the plurality of users to common physical resources. This may facilitate encoding and may allow for reduced complexity of the apparatus as functionality may be shared.

According to an optional feature of the invention, the cellular communication system is a Time Division Duplex (TDD) cellular communication system.

The cellular communication system may specifically implement the 1.28 Mcps mode variant of the 3GPP TDD system. The user equipment specific information may be user equipment specific information associated with a TDD uplink communication.

According to an optional feature of the invention, the cellular communication system is a UTRA (UMTS (Universal Mobile Telecommunication System) Terrestrial Radio Access) TDD cellular communication system specified by the 3rd Generation Partnership Project. The invention may provide a particularly advantageous and efficient means of communicating UE specific information specifically suitable for and compliant with the UTRA TDD system.

According to an optional feature of the invention, the user equipment specific information consists of Transmit Power Control (TPC) and Synchronisation Shift (SS) data. The invention may provide a particularly advantageous and efficient means of communicating TPC and SS data in a UTRA TDD system. The invention may allow a reduced resource use, improved performance and/or increased update rate. For example, an efficient and frequent communication of TPC and SS data may be accomplished resulting in improved performance of an associated uplink DPCH.

According to an optional feature of the invention, the apparatus further comprises means for determining a transmit power of the minimum transmission resource unit in response to a number of user equipment for which the minimum transmission resource unit comprises user equipment specific information.

This may improve the reliability of the communication and/or may reduce the resource use and/or caused interference. For example, if UE specific information is communicated only to a few users, increased redundancy may be introduced and the transmit power may be reduced.

According to an optional feature of the invention, the apparatus further comprises means for determining an encoding process for the minimum transmission resource unit in response to a number of user equipment for which the minimum transmission resource unit comprises user equipment specific information.

This may improve the reliability of the communication and/or may reduce the resource use and/or caused interference. The encoding process may for example include a forward error correcting coding process. For example, if UE specific information is communicated only to a few users, a high performance forward error correcting code (with high redundancy and thus low data rate) may be used with a reduced transmit power.

According to an optional feature of the invention, the minimum transmission resource unit does not comprise verification data.

This may provide a reduced overhead and may exploit that general reliability of the minimum transmission resource unit is typically not important to the individual UE as only errors in the UE specific information for the UE will have an impact. Errors experienced by a UE in the UE specific information may not directly affect the reliability of the information for other UEs.

According to an optional feature of the invention, the means for transmitting is operable to transmit user equipment specific information for a first user in intermittent minimum transmission resource units.

For example, UE specific information for a specific UE may only be transmitted in every other minimum transmission resource unit. This may improve the communication efficiency and may provide an increased flexibility of the resource allocation for communication of UE specific information.

According to an optional feature of the invention, the minimum transmission resource unit corresponds to a minimum size transmission block of user equipment specific information which can be transmitted by the means for transmitting.

In some embodiments, the minimum transmission resource unit may be the smallest data block which can be allocated by a resource scheduler for transmission by the means for transmitting. Specifically, in some embodiments, the minimum transmission resource unit may be the smallest data block or unit which can be transmitted individually in accordance with the specifications of the cellular communication system. For example, for a 3GPP TDD communication system, the minimum transmission resource unit may be a single channelisation code in a single time slot on a single carrier.

The apparatus may be a base station also known as a Node B in some cellular communication systems.

According to a second example there is provided a user equipment for receiving user equipment specific information from a base station in a cellular communication system; the apparatus comprising: means for receiving a minimum transmission resource unit comprising combined user equipment specific information for a plurality of user equipment; and means for determining user specific information for the user equipment from the minimum transmission resource unit.

According to an optional feature of the invention the combined user equipment specific information is jointly encoded; and the means for determining comprises means for decoding the combined user equipment specific information and for selecting the user equipment specific information for the user equipment.

According to a third example there is provided a cellular communication system comprising: a first apparatus for transmitting user equipment specific information from a base station to a user equipment, the first apparatus comprising: means for combining user equipment specific information for a plurality of user equipment to generate combined user equipment specific information, means for encoding the combined user equipment specific information, and means for transmitting the combined user equipment specific information in a minimum transmission resource unit; and the user equipment comprising: means for receiving a minimum transmission resource unit comprising combined user equipment specific information for a plurality of user equipment; and means for determining user specific information for the user equipment from the minimum transmission resource unit.

According to a fourth example there is provided a method of transmitting user equipment specific information from a base station to a user equipment in a cellular communication system; the method comprising the steps of: combining user equipment specific information for a plurality of user equipment to generate combined user equipment specific information; encoding the combined user equipment specific information; and transmitting the combined user equipment specific information in a minimum transmission resource unit.

According to a fifth example there is provided method of receiving user equipment specific information from a base station in a cellular communication system; the method comprising the steps of: receiving a minimum transmission resource unit comprising combined user equipment specific information for a plurality of user equipment; and determining user specific information for the user equipment from the minimum transmission resource unit.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 illustrates a cellular communication system in accordance with an embodiment of the invention; and
FIG. 2 illustrates an example of an encode processor for a base station in accordance with an embodiment of the invention.

### Detailed Description of an Embodiment of the Invention

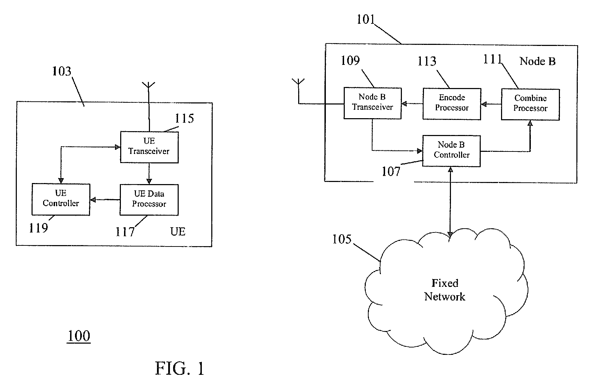

FIG. 1 illustrates a cellular communication system 100 in accordance with an embodiment of the invention.

The cellular communication system 100 comprises a base station, henceforth referred to as a Node B 101 in accordance with the terminology used for 3^{rd} generation cellular communication systems. The Node B 101 communicates with a plurality of User Equipment (UE)(of which only one 103 is shown) as is well known by the person skilled in the art.

The UE 103 may be a subscriber unit, a wireless user equipment, a mobile station, a communication terminal, a personal digital assistant, a laptop computer, an embedded communication processor or any communication element capable of communicating over the air interface of the cellular communication system.

The Node B 101 is further coupled to a fixed network which interconnects base stations and is operable to route data between any two base stations, thereby enabling a UE in a cell to communicate with a UE in any other cell. In addition, the fixed network comprises gateway functions for interconnecting to external networks such as the Public Switched Telephone Network (PSTN), thereby allowing UEs to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc. The fixed network may specifically include Radio Network Controllers (RNCs) and a core network as well known to the person skilled in the art.

In the embodiment of FIG. 1, the Node B 101 supports one or more services of the UE 103. In the example, the Node B 101 frequently communicates very small amounts of data to the UE 103. The data is UE specific information that is not applicable or relevant to other UEs. The UE specific information may be data which is part of a communication service provided to the UE 103 or may be data which is communicated in support of the services provided to the UE 103.

As a specific example, the Node B 101 may in the embodiment of FIG. 1 transmit 3 bits of data to the UE 103 every five msec.

In addition, to the transmission to the UE 103, the node B 101 may also support similar services for a number of other UEs. Hence, the Node B 101 must communicate a potentially large number of very small data blocks to individual UEs. Conventionally, this is very inefficient in cellular communication systems and results in a large overhead and very high resource consumption per transmitted data bit.

In accordance with the embodiment of FIG. 1, the Node B 101 comprises a Node B controller 107. The Node B controller 107 is operable to implement the functionality desired or required by a Node B 101 as is well known to a person skilled in the art.

In the example of FIG. 1, the Node B controller 107 is coupled to a Node B transceiver 109 which is operable to transmit and receive data over the air interface of the cellular communication system. In the specific embodiment, the Node B controller 107 is operable to generate control information for the individual UEs in response to signals received from the UEs. For example, the Node B controller 107 may generate uplink power control or synchronisation (e.g. code timing synchronisation) data for each individual UE.

The Node B controller 107 is coupled to a combine processor 111. In accordance with the embodiment of FIG. 1, the combine processor 111 is operable to combine user equipment specific information for a plurality of user equipment to generate combined UE specific information. For example, the combine processor 111 may receive power control and synchronisation data from the Node B controller 107 and combine these into a single block of control data comprising information for a group of UEs.

The combine processor 111 is coupled to an encode processor 113 which receives the combined UE specific information from the combine processor 111. For example, the encode processor 113 receives the data block of power control and synchronisation information from the combine processor 111.

The encode processor 113 is operable to encode the combined UE specific information to generate data suitable for transmission. In the embodiment of FIG. 1, the encode processor 113 performs error correcting coding, interleaving and symbol mapping for transmission.

In some embodiments, the encode processor 113 encodes data for each UE individually and independently of the data for other UEs. However, as described later, the encode processor 113 may in other embodiments perform a joint encoding wherein the data for different UEs is encoded together resulting in encoded data which depends on UE specific information associated with more than one UE.

The encode processor 113 thus encodes the combined UE specific information and feeds it to the Node B transceiver 109 which transmits it over the air interface in a minimum transmission resource unit.

Hence, in accordance with the embodiment, a minimum transmission resource unit is generated which comprises UE specific information for a plurality of UEs. Hence, the embodiment may allow for UE specific information to be transmitted efficiently in granularities significantly lower than the resource granularity corresponding to the minimum transmission resource unit.

The minimum transmission resource unit typically depends on the specific embodiment.

The minimum transmission resource unit may be a single time code frequency resource allocation unit. For example in cellular communication systems, a resource allocation may generally allocate resource in the form of a resource unit corresponding to a specified carrier frequency, a specified time interval and a specified code division code. Thus, the minimum transmission resource unit may be the smallest time interval which can be allocated for one carrier and one code. Specifically, the minimum transmission resource unit may be a time slot of a Time Division Multiple Access (TDMA) or Time Division Duplex (TDD) cellular communication system. In some communication systems, code division is not applied and the minimum transmission resource unit may be determined by the remaining parameters used for separation between UEs - e.g. by time slots and carrier frequencies.

In some embodiments, other constraints may limit the minimum size of resource units. Hence, the minimum size of a resource unit used in a cellular communication system may be determined by limitations in technical specifications which have been standardised or by implementation constraints.

The minimum transmission resource unit may be the smallest resource unit which can be transmitted continuously by the Node B transceiver 109.

Hence, in accordance with the embodiment, the Node B 101 is capable of transmitting UE specific data of a size much smaller than the minimum transmission resource unit without incurring an overhead determined by the size of the minimum transmission resource unit. Hence, a much more efficient communication of small amounts of UE specific information is achieved.

The UE specific information for a plurality of UEs may for example be transmitted in a single time slot using the same channelisation code. The individual UEs may then receive the time slot, decode the time slot and retrieve the UE specific information for the individual UE.

Accordingly, the UE 103 comprises a UE transceiver 115 which receives and transmits data over the air interface. Specifically, the UE transceiver 115 receives the minimum transmission resource unit and feeds this to a UE data processor 117. The UE data processor 117 is operable to decode the minimum transmission resource unit and to extract the UE specific information for the specific UE 103.

In the embodiment of FIG. 1, the UE 103 further comprises a UE controller 119 which implements all other functionality required by the UE 103 as is well known to the person skilled in the art.

In the embodiment of FIG. 1, the UE data processor 117 is coupled to the UE controller 119. Hence, as an example, the Node B 101 may transmit power control and synchronisation data for a plurality of UEs in a single time slot on a single channelisation code. The UE 103 may receive this transmission, decode it and extract the power control and synchronisation data for the UE 103. This data may then be fed to the UE controller 119 which may adjust the transmit power and timing of the uplink transmissions accordingly. Hence, an efficient system for transmitting low data rate control information is provided.

In order for the individual UE to select the relevant data, it is necessary for it to have knowledge of which data of the received minimum transmission resource unit is for that UE.

This may be achieved in many ways. In the embodiment of FIG. 1, the Node B 101 is operable to transmit data position information which is indicative of the position of UE specific information for the different user equipment. The position information may be transmitted in the minimum transmission resource unit or by another transmission. The position information may be direct and explicit. For example, a message may be transmitted by the Node B 101 to all UEs specifically associating a UE identity with each data of the minimum transmission resource unit. As the same association may be used for a large number of minimum transmission resource units, the resource usage associated with transmitting the position information may be kept acceptably low.

The position information may in some embodiments be provided indirectly by e.g. associative information. For example, the position information may be related to other system or UE parameters, and from knowledge of these system or UE parameters, the position of data from a specific UE may be determined.

In the following, a more detailed description of an embodiment of the invention applicable to a 3GPP UTRA TDD mobile radio communications system is described. In particular, the description will focus on communication of control information for a 1.28 Mcps TDD HSDPA service. However, it will be appreciated that the invention is not limited to this application but may be applied to many other cellular communication systems. The embodiment is compatible with the embodiment of FIG. 1 and will be described with reference to this.

In the specific embodiment, downlink packet data services are offered by means of HSDPA and using the HS-DSCH transport channel. Within the system, a fair proportion of HSDPA-active users do not have conversational-class traffic (ie: they are so-called data-only users). Accordingly a significant number of UEs tend to exhibit a bursty traffic profile.

In the system, an uplink dedicated physical channel (DPCH) is associated with the HSDPA operation. A downlink dedicated physical channel is not configured. The uplink DPCH is controlled by information provided from the Node B 101. In particular, the code timing and transmit power levels are controlled by Transmit Power Commands (TPC) data and Synchronisation Shift(SS) commands transmitted from the Node B 101.

In the embodiment, the TPC command is binary, representing either "power-up" or "power-down". The SS command is tri-state representing either "up", "down" or "do nothing". Hence, in the example, the Node B 101 communicates six levels of control information at a rate sufficiently high for the dynamic requirements of the power control and the synchronisation.

In accordance with the exemplary embodiment, the TPC and SS bits for each UE are not transmitted on an individual channelisation code of a time slot. Rather a TDD minimum transmission resource unit is used to convey information destined for a plurality of users within a cell. A single minimum transmission resource unit (in this case one timeslot and one channelisation code) is used to communicate TPC and SS bits to a plurality of UEs.

Hence, in accordance with the embodiment, the combine processor 111 of the Node B 101 may combine the TPC and SS data bits generated for a plurality of UEs into a single data block which can be transmitted in one time slot and with one channelisation code. Accordingly, one channelisation code is shared between a plurality of UEs thereby significantly reducing the number of channelisation codes used for communicating TPC and SS data and thus freeing up channelisation codes for other uses.

In some such embodiments, a new physical channel, henceforth denoted a Physical Layer Common Control Channel (PLCCH), may be implemented for efficient communication of TPC and SS data. The PLCCH may be implemented by transmission of messages on a single channelisation code of single time slots with each transmission comprising TPC and SS data bits for a plurality of UEs. As the PLCCH is shared between different UEs, the resource use is significantly reduced compared to the conventional approach for communication of TCP and SS data for HSDPA services.

In some embodiments, the PLCCH is implemented by the combine processor 111 generating a combined data block by including one TPC data bit and two SS data bits for each UE of the PLCCH message. Furthermore, the PLCCH message may simply be generated and transmitted by the encode processor 113 encoding the individual data bits of the data block in a suitable fashion.

However, in other embodiments the encode processor 113 is operable to jointly encode the TPC and SS information which relates to a plurality of UEs.

For example, in order to send TPC and SS data to a single user, a six-state value must be signalled (two possible values for the TPC and three possible values for the SS data). Rather than using 3 bits to achieve this per user (1 bit for TPC and 2 bits for SS) as per the current 3GPP specifications, the TPC and SS data for a plurality of UEs may be jointly encoded.

For example, if the TPC and SS data for one user has 6 possible values, the TPC and SS data for five UEs has 6⁵ = 7776 possible data values. Thus, by generating a combined parameter value comprising information of the TPC and SS data for five UEs, a 7776 state value must be encoded. This can be achieved by thirteen bits (2¹³=8192). In contrast, the individual encoding of the TPC and SS data will result in a requirement of 5*3=15 data bits. Hence a reduction in the number of data bits which must be transmitted is achieved.

As another example, in the prior art, 10 users using 1 bit for TPC and 2 bits for SS would require a total of 10*3=30 bits, and these would be distributed across multiple DPCHs (one to each user). However, by jointly encoding the commands across users onto a common PLCCH, this could be achieved using 10*log₂(6) = 25.85 (round up to 26) bits; a 13% saving. Furthermore as this can be transmitted on a single PLCCH message a very substantial reduction in the resource use is achieved.

It will be appreciated that the efficiency improvement may increase for increasing numbers of TPC and SS data being jointly encoded and that in some embodiments all TPC and SS data of a given PLCCH message may be jointly encoded.

In these examples, to decode the TPC and SS information, the UE would convert the received word into a base 6 number and select the digit position assigned to that user. The resulting six-state value maps directly to both a binary TPC command and a tri-state SS command.

It will be appreciated that any suitable way of jointly encoding the information may be used in accordance with the embodiment. For example, a simple one to one mapping between a block of TPC and SS bits for a plurality of UEs and an encoded PLCCH symbol representing the combined state may be implemented. The mapping may for example be implemented by a simple look-up table. The UE 103 may simply perform the joint decoding by implementing the reverse one to one mapping and selecting the appropriate TPC and SS data bits of the result.

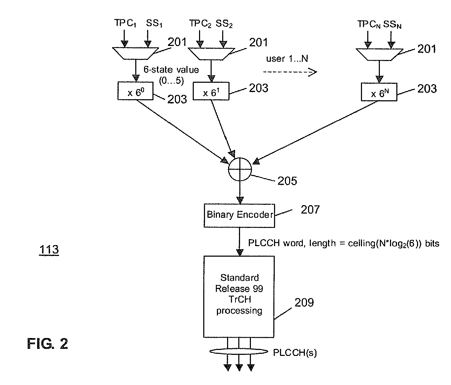

An example of an encode processor 113 using joint encoding is shown in FIG. 2. The encode processor 113 of FIG. 2 comprises N input circuits 201 which receive the TCP and SS data bits from the Node B controller 107. The TCP and SS data bits for each UE are converted into a value in the range from 0 to 5 (inclusive) in state converters 203. The output values of the state converters 203 are added in a summer 205. The sum is then encoded into a binary PLCCH word by a binary encoder 207. The resulting PLCCH word is then fed to a physical layer encoder 209 which generates the PLCCH message that is fed to the Node B transceiver 109 for transmission.

In the example, the physical layer encoder may encode the PLCCH using ½ rate or 1/3 rate convolutional or 1/3 rate turbo coding, or using no coding (as per the standard 3GPP release 99 transport channel processing). However, it should be understood that e.g. any generic forward error correcting entity could be used in its place, such as block codes, repetition codes, concatenated coding schemes etc.

In some embodiments, the encode processor 113 is operable to encode the PLCCH word by using processing algorithms of a group of algorithms used by a plurality of services.

Specifically, once constructed, traditional 3GPP transport channel processing could be employed to map the PLCCH word onto the physical channel(s). This means that the coding retains the full flexibility of the Layer 1 transport channel processing toolbox, and the PLCCH may be adapted to varying numbers of users (affecting the information bit rate) and to various system deployments and configurations.

As such, a transmit power or an encoding process for the PLCCH message may be determined in response to a number of UEs for which the minimum transmission resource unit comprises UE specific information. For example, for a small number of users, a low forward error correction code rate could be employed (this has more redundancy and requires less transmission power), whereas for a larger number of users a progressively higher code rate could be used (having less redundancy and higher transmit power requirements).

Additionally, if one physical channel transmission unit is not sufficient to carry the data for all of the intended users, a further physical channel may be used. The data destined for each physical channel may be handled by an encoder separately for each, or it may be encoded together by a single encoding unit and separated only at the output of the encoder. The formation of the PLCCH would thus resemble that of FIG. 2 for n=1...N UE's using the PLCCH. In this example, the data destined for multiple physical channels is encoded using a single encoder.

Thus, the use of a common TPC/SS physical channel (the PLCCH) may provide advantages in many embodiments. Specifically, for a given TPC/SS update rate, overall transmission power resources are reduced when compared to multiple DPCH or special burst transmissions. Furthermore, the code resources used for the transmission of TPC and SS information to the multiple users are greatly reduced (many downlink DPCH's are potentially replaced by a single PLCCH).

A further and substantial benefit is that the uplink power control and synchronisation update rates may be maintained if desired, whereas when using special bursts or multi-frame DPCH's (transmitted only every m^{th} frame), the update rate is correspondingly slower. (As will be known to the person skilled in the art special bursts are transmitted as a "keep-alive" signal at certain regular periods when no higher layer data is available to map to a physical channel. In the time between special burst, discontinuous transmission (DTX) is used).

However, in some embodiments the Node B may be operable to transmit TCP and SS information for a given UE in intermittent PLCCH messages.

For example, the framing structure of 1.28Mcps TDD is repeated every subframe (5ms) and in some examples the PLCCH may not need to be transmitted in every subframe. This would allow flexible use of system resources as the number of UEs actively using the PLCCH is increased or decreased. However, there is of course some degree of trade-off in that the TPC and SS update rates are also a function of how often the PLCCH is transmitted.

Additionally, the information for a given user need not be present in each PLCCH instance. This would enable the system to handle higher loads without consuming more resources, at the expense of a slower TPC and SS update rate. Conversely, more resources could be used to handle higher loads without compromising TPC and SS update rates.

As a specific example, assuming a ½ rate convolutional code is used, the minimum transmission unit of 88 channel bits (1 code at SF16, QPSK) would be able to convey 36 information bits. At log₂(6) bits per user, this could carry TPC and SS streams for approximately 14 users.

If the PLCCH were transmitted once per 5ms subframe, and the TPC and SS update rate for the uplink DPCH was once every (say) 10 or 20ms, it is clear that a single PLCCH could serve all active data-only HSDPA users in the cell (28 users at 10ms update rate, or 56 users at 20ms update rate). Here, a total of 13 SF16 downlink channelisation codes (previously used for downlink DPCH) are freed-up for use by other channels such as HS-DSCH by means of the invention. By being able to more efficiently use these codes, the system is able to serve higher data throughputs in each cell.

In some embodiments, the Node B 101 may comprise means for setting a transmit power for the PLCCH in response to a transmit power requirement of the plurality of user equipment. Specifically, the Node B controller 107 may calculate a suitable power level for each UE addressed by the PLCCH message, and the transmit power may be set to the highest of these values as this should ensure that the PLCCH message can be received by all UEs.

In general, the PLCCH must be received by multiple UE's and for this reason it is impractical to minimise the transmission power separately for each individual user. Although this may result in some power efficiency loss for the TPC and SS symbols, a far greater power saving is generally made due to the fact that the redundant data payload portions (ie: the non-TPC/SS symbols) of the downlink DPCH (or so-called 'special bursts) no longer need to be transmitted.

Simplistically, if e.g. 4 users had DL the DPCH powers P₁, P₂, P₃, P₄, and these could be replaced by a single channel of power P₀ = max (P₁, P₂, P₃, P₄), then it follows that P₀ < (P₁+P₂+P₃+P₄).

In some embodiments the PLCCH message may only comprise synchronisation commands with the uplink power control being achieved by other means (eg: using open-loop power control methods).

In some embodiments, the PLCCH does not comprise verification data.

Since the PLCCH message contains information for a plurality of users, it is not of importance that all of the data is received correctly by each UE. The block or frame error rate (BLER or FER respectively) is thus not of particular relevance in determining TPC or SS error performance. Rather the post-decoded bit error rate (BER) has the most direct relevance to TPC and SS performance. Because of this, there is typically no explicit need to protect the integrity of the data block with a cyclic redundancy check (CRC) or other checksum technique.

The invention can be implemented in any suitable form including hardware, software, firmware or any combination of these. However, preferably, the invention is implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

Aspects of the invention are set out in the following independent and dependent numbered clauses.

### CLAUSES

1. An apparatus for transmitting user equipment specific information from a base station to a user equipment in a cellular communication system; the apparatus comprising:
   means for combining user equipment specific information for a plurality of user equipment to generate combined user equipment specific information;
   means for encoding the combined user equipment specific information; and
   means for transmitting the combined user equipment specific information in a minimum transmission resource unit.
2. An apparatus according to clause 1 wherein the minimum transmission resource unit is a time slot.
3. An apparatus according to clause 1 wherein the minimum transmission resource unit is a single time code frequency resource allocation unit.
4. An apparatus according to any of the previous clauses wherein the means for encoding is operable to jointly encode user equipment specific information for at least two of the plurality of user equipment.
5. An apparatus according to clause 4 wherein the means for encoding is operable to jointly encode user equipment specific information associated with all user equipment of the plurality of user equipment.
6. An apparatus according to clause 4 or 5 wherein the encoding comprises forward error correcting coding
7. An apparatus according to any of clauses 4 to 6 wherein the user equipment specific information comprises a plurality of parameters each having a number of possible values, and wherein the means for encoding is operable to encode the plurality of parameters by encoding a combined parameter having a combined number of possible values equal to the product of the number of possible values of the plurality of parameters.
8. An apparatus according to any of the previous clauses wherein the user equipment specific information comprises power control information.
9. An apparatus according to any of the previous clauses wherein the user equipment specific information comprises synchronisation information.
10. An apparatus according to any of the previous clauses wherein the user equipment specific information comprises only synchronisation information.
11. An apparatus according to any of the previous clauses wherein the user equipment specific information is associated with an uplink channel from each of the plurality of user equipment.
12. An apparatus according to any of the previous clauses further comprising means for setting a transmit power for the minimum transmission resource unit in response to a transmit power requirement of the plurality of user equipment.
13. An apparatus according to any of the previous clauses further comprising means for transmitting position information indicative of a position of user equipment specific information for a first user equipment.
14. An apparatus according to any of the previous clauses wherein the user equipment specific information is control information associated with High Speed Downlink Packet Access (HSDPA) service.
15. An apparatus according to clause 14 wherein the user equipment specific information is associated with an uplink dedicated physical channel (DPCH) of the HSDPA downlink packet data service.
16. An apparatus according to any of the previous clauses wherein the means for encoding is operable to encode the combined user equipment specific information by using processing algorithms of a group of algorithms used by a plurality of services.
17. An apparatus according to any of the previous clauses wherein the cellular communication system is a Time Division Duplex (TDD) cellular communication system.
18. An apparatus according to clause 16 wherein the cellular communication system is the UTRA (UMTS (Universal Mobile Telecommunication System) Terrestrial Radio Access) TDD cellular communication system specified by the 3rd Generation Partnership Project.
19. An apparatus according to clause 18 wherein the user equipment specific information consists of Transmit Power Control (TPC) and Synchronisation Shift (SS) data.
20. An apparatus according to any of the previous clauses further comprising means for determining a transmit power of the minimum transmission resource unit in response to a number of user equipment for which the minimum transmission resource unit comprises user equipment specific information.
21. An apparatus according to any of the previous clauses further comprising means for determining an encoding process for the minimum transmission resource unit in response to a number of user equipment for which the minimum transmission resource unit comprises user equipment specific information.
22. An apparatus according to any of the previous clauses wherein the minimum transmission resource unit does not comprise verification data.
23. An apparatus according to of the previous clauses wherein the means for transmitting is operable to transmit user equipment specific information for a first user in intermittent minimum transmission resource units.
24. An apparatus according to any of the previous clauses wherein the minimum transmission resource unit corresponds to a minimum size transmission block of user equipment specific information which can be transmitted by the means for transmitting.
25. An apparatus according to any of the previous clauses wherein the apparatus is a base station
26. A user equipment for receiving user equipment specific information from a base station in a cellular communication system; the apparatus comprising:
   means for receiving a minimum transmission resource unit comprising combined user equipment specific information for a plurality of user equipment; and
   means for determining user specific information for the user equipment from the minimum transmission resource unit.
27. A user equipment according to clause 26 wherein the combined user equipment specific information is jointly encoded; and wherein the means for determining comprises means for decoding the combined user equipment specific information and for selecting the user equipment specific information for the user equipment.
28. A cellular communication system comprising
   a first apparatus for transmitting user equipment specific information from a base station to a user equipment, the first apparatus comprising:
   means for combining user equipment specific information for a plurality of user equipment to generate combined user equipment specific information,
   means for encoding the combined user equipment specific information, and
   means for transmitting the combined user equipment specific information in a minimum transmission resource unit; and
   the user equipment comprising:
   means for receiving a minimum transmission resource unit comprising combined user equipment specific information for a plurality of user equipment; and
   means for determining user specific information for the user equipment from the minimum transmission resource unit.
29. A method of transmitting user equipment specific information from a base station to a user equipment in a cellular communication system; the method comprising the steps of:
   combining user equipment specific information for a plurality of user equipment to generate combined user equipment specific information;
   encoding the combined user equipment specific information; and
   transmitting the combined user equipment specific information in a minimum transmission resource unit.
30. A method of receiving user equipment specific information from a base station in a cellular communication system; the method comprising the steps of:
   receiving a minimum transmission resource unit comprising combined user equipment specific information for a plurality of user equipment; and
   determining user specific information for the user equipment from the minimum transmission resource unit.

## Claims

1. A method of receiving mobile user equipment specific information at a mobile user equipment (103) in a cellular communication system (100); the method comprising the steps of: receiving a transmission of the smallest block of data for transmission of user equipment specific information comprising combined mobile user equipment specific information for a plurality of mobile user equipment and receiving an indication to assist the user equipment determine user equipment specific information for the user equipment from within the combined user equipment specific information; and determining user equipment specific information for the mobile user equipment from the smallest block of data for transmission of user equipment specific information.

2. A method as claimed in claim 1 wherein the combined mobile user equipment specific information is jointly encoded; and wherein the step of determining user specif information for the mobile user equipment comprises decoding the combined mobile user equipment specific information and selecting the mobile user equipment specific information for the mobile user equipment.

3. A method as claimed in claim 1 or 2 wherein the mobile user equipment specific information comprises a plurality of parameters each having a number of possible values encoded by encoding a combined parameter having a combined number of possible values equal to the product of the number of possible values of the plurality of parameters.

4. A method as claimed in any of the previous claims wherein the mobile user equipment specific information comprises power control information.

5. A method as claimed in any of the previous claims wherein the mobile user equipment specific information comprises synchronization information.

6. A method as claimed in any of the previous claims wherein the mobile user equipment specific information comprises only synchronisation information.

7. A method as claimed in any of the previous claims wherein the mobile user equipment specific information is associated with an uplink channel from the mobile user equipment to a base station.

8. A method as claimed in any of the previous claims further comprising receiving position information indicative of a position of the mobile user equipment specif information for the mobile user equipment in the smallest block of data for transmission of user equipment specific information.

9. A method as claimed in any of the previous claims wherein the mobile user equipment specific information is control information associated with High Speed Downlink Packet Access ,HSDPA service.

10. A method as claimed in claim 9 wherein the mobile user equipment specific information is associated with an uplink dedicated physical channel ,DPCH, of the HSDPA downlink packet data service.

11. A method as claimed in any of the previous claims performed in accordance with 3rd Generation Partnership Project Technical Specifications.

12. A method as claimed in claim 11 wherein the mobile user equipment specific information consists of Transmit Power Control, TPC, and Synchronisation Shift,SS, data.

13. A method as claimed in any of the previous claims wherein the smallest block of data for transmission of user equipment specific information does not comprise verification data.

14. A method as claimed in any of the previous claims wherein the mobile user equipment specific information comprises power control information and the smallest block of data for transmission of user equipment specific information corresponds to a minimum size transmission block of power control information which can be transmitted in the cellular communication system,

15. A method as claimed in any of the previous claims wherein the combined user equipment specific information comprises control information.

16. A method as claimed in any of the previous claims wherein the combined user equipment specific information and the indication to assist an individual user equipment determine user equipment specific information for that individual user equipment from within the combined user equipment specific information are received in different transmissions.

17. A method as claimed in any of the previous claims wherein the user equipment specific information is transmitted on a common physical control channel that is received by the plurality of user equipment.

## Patentansprüche

1. Verfahren zum Empfangen von für ein mobiles Anwendergerät spezifischen Informationen an einem mobilen Anwendergerät (103) in einem zellularen Kommunikationssystem (100); wobei das Verfahren die folgende Schritte umfasst: Empfangen einer Übertragung des kleinsten Datenblocks für die Übertragung von für ein Anwendergerät spezifischen Informationen, die kombinierte für ein mobiles Anwendergerät spezifische Informationen für mehrere mobile Anwendergeräte umfassen, und Empfangen einer Angabe, um das Anwendergerät zu unterstützen, für ein Anwendergerät spezifische Informationen für das Anwendergerät innerhalb der kombinierten für ein Anwendergerät spezifischen Informationen zu bestimmen; und Bestimmen von für ein Anwendergerät spezifischen Informationen für das mobile Anwendergerät von dem kleinsten Datenblock für die Übertragung von für ein Anwendergerät spezifischen Informationen.

2. Verfahren nach Anspruch 1, wobei die kombinierten für ein mobiles Anwendergerät spezifischen Informationen gemeinsam codiert werden; und wobei der Schritt des Bestimmens von für einen Anwender spezifischen Informationen für das mobile Anwendergerät Folgendes umfasst: Decodieren der kombinierten für ein mobiles Anwendergerät spezifischen Informationen und Auswählen der für ein mobiles Anwendergerät spezifischen Informationen für das mobile Anwendergerät.

3. Verfahren nach Anspruch 1 oder 2, wobei die für ein mobiles Anwendergerät spezifischen Informationen mehrere Parameter umfassen, die jeweils eine Anzahl von möglichen Werten besitzen, die durch Codieren eines kombinierten Parameters mit einer kombinierten Anzahl von möglichen Werten, die gleich dem Produkt der Anzahl der möglichen Werte der mehreren Parameter ist, codiert werden.

4. Verfahren nach einem der vorhergehenden Ansprüche, wobei die für ein mobiles Anwendergerät spezifischen Informationen Leistungssteuerinformationen umfassen.

5. Verfahren nach einem der vorhergehenden Ansprüche wobei die für ein mobiles Anwendergerät spezifischen Informationen Synchronisationsinformationen umfassen.

6. Verfahren nach einem der vorhergehenden Ansprüche wobei die für ein mobiles Anwendergerät spezifischen Informationen nur Synchronisationsinformationen umfassen.

7. Verfahren nach einem der vorhergehenden Ansprüche, wobei die für ein mobiles Anwendergerät spezifischen Informationen einem Aufwärtsstreckenkanal von dem mobilen Anwendergerät zu einer Basisstation zugeordnet sind.

8. Verfahren nach einem der vorhergehenden Ansprüche, das ferner Folgendes umfasst: Empfangen von Positionsinformationen, die eine Position der für ein mobiles Anwendergerät spezifischen Informationen für das mobile Anwendergerät in dem kleinsten Datenblock für die Übertragung von für ein Anwendergerät spezifischen Informationen umfassen.

9. Verfahren nach einem der vorhergehenden Ansprüche, wobei die für ein mobiles Anwendergerät spezifischen Informationen Steuerinformationen sind, die einem Hochgeschwindigkeitsabwärtsstreckenpaketzugriffsdienst, HSDPA-Dienst, zugeordnet sind.

10. Verfahren nach Anspruch 9, wobei die für ein mobiles Anwendergerät spezifischen Informationen einem dedizierten physikalischen Aufwärtsstreckenkanal, DPCH, des HSDPA-Abwärtsstreckenpaketdatendienstes zugeordnet sind.

11. Verfahren nach einem der vorhergehenden Ansprüche, das in Übereinstimmung mit technischen Spezifikationen des Partnerschaftsprojektes der 3. Generation durchgeführt wird.

12. Verfahren nach Anspruch 11, wobei die für ein mobiles Anwendergerät spezifischen Informationen aus Sendeleistungssteuerungsdaten, TPC-Daten, und Synchronisationsverschiebungsten, SS-Daten, bestehen.

13. Verfahren nach einem der vorhergehenden Ansprüche, wobei der kleinste Datenblock für die Übertragung von für ein Anwendergerät spezifischen Informationen keine Überprüfungsdaten umfasst.

14. Verfahren nach einem der vorhergehenden Ansprüche, wobei die für ein Anwendergerät spezifischen Informationen Leistungssteuerinformationen umfassen und der kleinste Datenblock für die Übertragung von für ein Anwendergerät spezifischen Informationen einem Übertragungsblock minimaler Größe von Leistungssteuerinformationen entspricht, die in dem zellularen Kommunikationssystem gesendet werden können.

15. Verfahren nach einem der vorhergehenden Ansprüche, wobei die kombinierten für ein Anwendergerät spezifischen Informationen Steuerinformationen umfassen.

16. Verfahren nach einem der vorhergehenden Ansprüche, wobei die kombinierten für ein Anwendergerät spezifischen Informationen und die Angabe, um ein individuelles Anwendergerät zu unterstützen, für ein Anwendergerät spezifische Informationen für das individuelle Anwendergerät innerhalb der kombinierten für das Anwendergerät spezifischen Informationen zu bestimmen, in verschiedenen Übertragungen empfangen werden.

17. Verfahren nach einem der vorhergehenden Ansprüche, wobei die für ein Anwendergerät spezifischen Informationen auf einem gemeinsamen physikalischen Steuerkanal gesendet werden, der durch die mehreren Anwendergeräte empfangen wird.

## Revendications

1. Procédé pour recevoir des informations spécifiques d'équipements utilisateurs mobiles au niveau d'un équipement utilisateur mobile (103) dans un système de communication cellulaire (100) ; le procédé comprenant les étapes suivantes : la réception d'une transmission du plus petit bloc de données de transmission d'informations spécifiques d'équipements utilisateurs comprenant des informations spécifiques d'équipements utilisateurs mobiles combinées pour une pluralité d'équipements utilisateurs mobiles et la réception d'une indication d'assistance de l'équipement utilisateur pour déterminer les informations spécifiques d'équipements utilisateurs pour l'équipement utilisateur à partir des informations spécifiques d'équipements utilisateurs combinées ;
et
la détermination d'informations spécifiques d'équipements utilisateurs pour l'équipement utilisateur mobile à partir du plus petit bloc de données de transmission d'informations spécifiques d'équipements utilisateurs.

2. Procédé selon la revendication 1, dans lequel les informations spécifiques d'équipements utilisateurs mobiles combinées sont codées conjointement ; et dans lequel l'étape de détermination d'informations spécifiques d'utilisateurs pour l'équipement utilisateur mobile comprend le décodage des informations spécifiques d'équipements utilisateurs mobiles combinées et la sélection des informations spécifiques d'équipements d'utilisateurs mobiles pour l'équipement utilisateur mobile.

3. Procédé selon la revendication 1 ou 2, dans lequel les informations spécifiques d'équipements utilisateurs mobiles comprennent une pluralité de paramètres ayant chacun un nombre de valeurs possibles codées en codant un paramètre combiné ayant un nombre combiné de valeurs possibles égal au produit du nombre de valeurs possibles de la pluralité de paramètres.

4. Procédé selon l'une quelconque des revendications précédentes, dans lequel les informations spécifiques d'équipements utilisateurs mobiles comprennent des informations de commande de puissance.

5. Procédé selon l'une quelconque des revendications précédentes, dans lequel les informations spécifiques d'équipements utilisateurs mobiles comprennent des informations de synchronisation.

6. Procédé selon l'une quelconque des revendications précédentes, dans lequel les informations spécifiques d'équipements utilisateurs mobiles comprennent uniquement des informations de synchronisation.

7. Procédé selon l'une quelconque des revendications précédentes, dans lequel les informations spécifiques d'équipements utilisateurs mobiles sont associées à un canal de liaison montante allant de l'équipement utilisateur mobile à une station de base.

8. Procédé selon l'une quelconque des revendications précédentes, comprenant en outre la réception d'informations de position indicatives d'une position des informations spécifiques d'équipements utilisateurs mobiles de l'équipement utilisateur mobile dans le plus petit bloc de données de transmission d'informations spécifiques d'équipements utilisateurs.

9. Procédé selon l'une quelconque des revendications précédentes, dans lequel les informations spécifiques d'équipements utilisateurs mobiles sont des informations de commande associées au service d'accès par paquets sur liaison descendante à haut débit, HSDPA.

10. Procédé selon la revendication 9, dans lequel les informations spécifiques d'équipements utilisateurs mobiles sont associées à un canal physique dédié de liaison montante, DPCH, du service d'accès par paquets sur liaison descendante HSDPA.

11. Procédé selon l'une quelconque des revendications précédentes, réalisé conformément aux spécifications techniques du 3rd Generation Partnership Project.

12. Procédé selon la revendication 11, dans lequel les informations spécifiques d'équipements utilisateurs mobiles consistent en des données de commande de puissance de transmission, TPC, et de décalage de synchronisation, SS.

13. Procédé selon l'une quelconque des revendications précédentes, dans lequel le plus petit bloc de données de transmission d'informations spécifiques d'équipements utilisateurs ne comprend pas de données de vérification.

14. Procédé selon l'une quelconque des revendications précédentes, dans lequel les informations spécifiques d'équipements utilisateurs mobiles comprennent des informations de commande de puissance et le plus petit bloc de données de transmission d'informations spécifiques d'équipements utilisateurs correspond à un bloc de transmission de taille minimum d'informations de commande de puissance qui peut être transmis dans le système de communication cellulaire.

15. Procédé selon l'une quelconque des revendications précédentes, dans lequel les informations spécifiques d'équipements utilisateurs mobiles combinées comprennent des informations de commande.

16. Procédé selon l'une quelconque des revendications précédentes, dans lequel les informations spécifiques d'équipements utilisateurs mobiles combinées et l'indication d'assistance d'un équipement utilisateur individuel à déterminer des informations spécifiques d'équipements utilisateurs pour cet équipement d'utilisateur individuel parmi les informations spécifiques d'équipements utilisateurs combinées sont reçues dans différentes transmissions.

17. Procédé selon l'une quelconque des revendications précédentes, dans lequel les informations spécifiques d'équipements utilisateurs sont transmises sur un canal de commande physique commun qui est reçu par la pluralité des équipements utilisateurs.
